# EUROPÄISCHE PATENTANMELDUNG

(11) **EP 4 571 439 A1**
(43) Veröffentlichungstag der Anmeldung: **18.06.2025**
(21) Anmeldenummer: 24211981.6
(22) Anmeldetag: 11.11.2024
(51) Int. Cl.: G05B 19/042, G06F 21/64

(54) **VORRICHTUNG ZUR ÜBERWACHUNG EINES STEUERGERÄTS UND COMPUTERIMPLEMENTIERTES VERFAHREN ZUR ÜBERWACHUNG EINES STEUERGERÄTS**

(30) Priorität: 11.12.2023 DE 102023005101
(71) Anmelder: Rolls-Royce Solutions GmbH, 88045 Friedrichshafen (DE)
(72) Erfinder: Karch, Torsten, 88085 Langenargen (DE); Pogrzeba, Moritz, 82110 Germering (DE)

(57) **Zusammenfassung**

Vorrichtung (1) zur Überwachung eines Steuergeräts (10) einer Maschine (2), umfassend: ein Lesemodul (5) zum Abrufen von Daten (12) aus einem zu prüfenden und mehrere Speicherzellen (13) aufweisendem Datenspeicher (11) des Steuergeräts (2), wobei die Speicherzellen (13) mittels Speicheradressen (14) identifizierbar sind, einen Speicher (7) zur Bereitstellung von Anwendungsreferenzdaten (18) zu der Maschine (2), ein Modul (16) zur Erkennung und Extraktion von Anwendungsdaten (17) der Maschine (2) aus den vom Datenspeicher (11) abgerufenen Daten (12), eine Manipulationserkennungseinheit (3) zum Vergleichen der Anwendungsdaten (17) der Maschine (2) mit den Anwendungsreferenzdaten (18) und eine Signalausgabeeinheit (4) zum Ausgeben eines Alarmsignals (8), wobei die Manipulationserkennungseinheit (3) ausgestaltet ist, beim Vergleichen der Anwendungsdaten (17) der Maschine (2) mit den Anwendungsreferenzdaten (18) wenigstens ein Sicherheitsmerkmal (19) zu erfassen, das Sicherheitsmerkmal (19) auszuwerten und durch die Auswertung des Sicherheitsmerkmals (19) eine Manipulation der Steuergeräts (10) der Maschine (2) zu erkennen.

## Beschreibung

Die vorliegende Erfindung betrifft eine Vorrichtung zur Überwachung eines Steuergeräts gemäß dem unabhängigen Anspruch 1. Ferner betrifft sie ein computerimplementiertes Verfahren zur Überwachung eines Steuergeräts gemäß dem unabhängigen Anspruch 11.

Steuergeräte werden in der Industrie und in der Wissenschaft eingesetzt und dienen zum effizienten, exakten und sicheren Betrieb von Maschinen, zu denen Fahrzeuge und Antriebssysteme gehören.

Fahrzeuge sind Maschinen, welche mittels translatorischer Bewegung Personen und/oder Gegenstände von einem Ort zu einem anderen Ort transportieren können.

Antriebssysteme sind Maschinen, welche durch Energieumwandlung eine mechanische Leistung bereitstellen. Antriebssysteme können Fahrzeuge antreiben, um eine Bewegung des Fahrzeugs zu ermöglichen. Sie können aber auch Generatoren oder andere Anlagen betreiben, um die mechanische Leistung in andere Energiearten umzuwandeln.

Zu den Antriebssystemen gehören Motoren, Verbrennungsmotoren und Verbrennungskraftmaschinen die Verbrennungsmotoren umfassen.

Antriebssysteme sind oft mit elektronischen Steuergeräten ausgestattet. Sie dienen dazu, in den Antriebssystemen Sensordaten zu empfangen, auszuwerten, sie mittels Algorithmen zu verarbeiten und daraus Stellgrößen für den Systembetrieb zu bestimmen und auszugeben. Die Stellgrößen, welche von einem Steuergerät ausgegeben werden, haben meistens den Zweck, verschiedene Aktuatoren der Verbrennungskraftmaschine innerhalb von sicheren Grenzwertbereichen zu betreiben. Die Grenzwertbereiche können beispielsweise einen zulässigen Temperaturbereich oder einen zulässigen Druckbereich definieren.

Verbrennungskraftmaschinen werden beispielsweise in Fahrzeugen als Antriebssysteme oder in Gebäuden in Kombination mit einem Generator als Stromaggregat eingesetzt. In einer Verbrennungskraftmaschine wird ein zugeführter Brennstoff verbrannt und stellt dabei eine mechanische Leistung bereit. Diese Leistung kann zum Antrieb eines Fahrzeugs oder eines Generators benutzt werden.

Zu den Anforderungen an Maschinen und Anlagen zählen neben einem kostenoptimalen Betrieb auch die Erfüllung von Sicherheitsvorgaben, zu denen auch die Fähigkeit gehört, eine unerlaubte Manipulation von außen zu erfassen und zu melden. Die unerlaubte Manipulation von Maschinen bzw. von ihren Steuergeräten von außen wird auch als Cyberangriff bezeichnet und kann insbesondere sicherheitskritische Maschinen und Anlagen betreffen.

In Steuergeräten der eingangs genannten Art sind oft keine wirksamen Funktionen zur Überwachung vorhanden, mit denen eine Manipulation von außen erkennbar ist, welche die Integrität der Maschinenfunktion beeinträchtigt.

Wird eine neue Anforderung eingeführt, wonach ein bestimmtes Steuergerät eine Manipulation von außen der oben genannten Art erkennen und melden muss, muss gemäß dem Stand der Technik das Steuergerät in seiner Programmierung bzw. Konfiguration angepasst werden, wodurch vorhandene Zertifizierungen nicht weiter gültig sind. Eine neue Zertifizierung ist mit erhöhtem Aufwand und erhöhten Kosten verbunden.

Der Erfindung liegt die Aufgabe zugrunde, eine Vorrichtung zur Überwachung von Steuergeräten bereitzustellen, mit welcher bei gleichbleibenden Kosten die Datensicherheit in vorhandenen Maschinen-Steuergeräten erhöht werden kann, ohne die Steuergerätsprogrammierung zu ändern. Insbesondere soll eine Vorrichtung zur Überwachung von Steuergeräten zur Nachrüstung von bestehenden Maschinen-Steuergeräten bereitgestellt werden.

Die Aufgabe wird mit einer Vorrichtung gemäß dem unabhängigen Anspruch 1 gelöst.

Eine Vorrichtung zur Überwachung eines Steuergeräts einer Maschine umfasst ein Lesemodul zum Abrufen von Daten aus einem zu prüfenden und mehrere Speicherzellen aufweisendem Datenspeicher des Steuergeräts, wobei die Speicherzellen mittels Speicheradressen identifizierbar sind. Vorzugsweise ist das Lesemodul mit einem Mechanismus versehen, mit welchem ein Vorgang zum Lesen von Daten gestartet werden kann. Ein solcher Mechanismus kann programmiert oder als Elektronikteil gefertigt sein. Vorzugsweise umfasst das Lesemodul eine Eingangsdatenschnittstelle, an welcher abgerufene Daten aufgenommen werden können.

Ferner umfasst die Vorrichtung einen Speicher zur Bereitstellung von Anwendungsreferenzdaten der Maschine. Bei den Anwendungsreferenzdaten der Maschine handelt es sich um Referenzdaten für Parameter der Maschine, die ihre Funktion betreffen, wie z.B. eine Drehzahl oder eine Geschwindigkeit eines wesentlichen Maschinenbauelements. Die Anwendungsreferenzdaten, die im Speicher abgelegt sind, können aktualisiert werden, indem sie durch neue Anwendungsreferenzdaten ersetzt werden.

Die Vorrichtung weist ein Modul zur Erkennung und Extraktion von Anwendungsdaten der Maschine aus den vom Datenspeicher des Steuergeräts abgerufenen Daten auf. Unter Anwendungsdaten sind Maschinenanwendungsdaten zu verstehen. Das Modul weist beispielsweise eine Funktion auf, mit welcher die Anwendungsdaten des Datenspeichers identifiziert und von den restlichen Daten getrennt werden. Die Anwendungsdaten der Maschine können beispielsweise mit einem Attribut, wie z.B. einem Datenparameter, einer Formatierung, oder einer Adresse, versehen sein, mit welchem sie eindeutig identifizierbar sind.

Ferner umfasst die Vorrichtung eine Manipulationserkennungseinheit zum Vergleichen der Anwendungsdaten mit den Anwendungsreferenzdaten und eine Signalausgabeeinheit zum Ausgeben eines Alarmsignals. Mithilfe des Vergleichs der Anwendungsdaten mit den Anwendungsreferenzdaten werden die Anwendungsdaten geprüft.

Die Manipulationserkennungseinheit ist ausgestaltet, beim Vergleichen der Anwendungsdaten mit den Anwendungsreferenzdaten wenigstens ein Sicherheitsmerkmal zu erfassen, das Sicherheitsmerkmal auszuwerten und durch die Auswertung des Sicherheitsmerkmals eine Manipulation der Steuergeräts der Maschine zu erkennen. Wird eine Manipulation des Steuergeräts erkannt, so kann beispielsweise die Manipulationserkennungseinheit ein Signal generieren, mit welchem die Signalausgabeeinheit aktiviert wird, um ein Alarmsignal auszugeben.

Die Lösung gemäß der Erfindung ermöglicht eine Überprüfung von Maschinenanwendungsdaten durch ausschließliches Lesen des Datenspeichers im Steuergerät der Maschine. Dadurch können Steuergeräte vorhandener Maschinen mit vermindertem Aufwand mit der Vorrichtung versehen oder nachgerüstet werden, ohne ihre Grundkonfiguration bzw. die Programmierung der Steuergeräte zu ändern. Die Speicherung der Anwendungsreferenzdaten im Speicher der Vorrichtung ermöglichen eine zuverlässige und manipulationssichere Prüfung der Anwendungsdaten.

Die erfindungsgemäße Lösung kann durch verschiedene, jeweils für sich vorteilhafte und beliebig miteinander kombinierbare Ausgestaltungen weiter verbessert werden. Auf diese Ausgestaltungsform und die mit ihnen verbundenen Vorteile ist im Folgenden eingegangen. Die in Bezug auf die Vorrichtung beschriebenen Vorteile gelten ebenso für das erfindungsgemäße computerimplementierte Verfahren und umgekehrt.

Gemäß einer ersten Ausgestaltung umfassen die Anwendungsreferenzdaten eine Anfangsspeicheradresse und eine Endspeicheradresse eines Anwendungsdatenbereichs des zu prüfenden Datenspeichers, wobei der Anwendungsdatenbereich die Anwendungsdaten der Maschine beinhaltet. Vorteilhafterweise umfassen die Anwendungsreferenzdaten der Maschine eine Anfangsspeicheradresse und eine Endspeicheradresse eines Anwendungsdatenbereichs des zu prüfenden Datenspeichers und sind ausgestaltet, mit Daten aus dem Anwendungsdatenbereich des zu prüfenden Datenspeichers verglichen zu werden. Dies stellt sicher, dass die Anwendungsdaten, wie z.B. eine Geschwindigkeitssteuerungsdatei, eine Drehzahlsteuerungsdatei oder eine Einspritzmengensteuerungsdatei, im Steuergerät der Maschine auf eine unerlaubte Manipulation geprüft werden, was die Sicherheit des Maschinenbetriebs gegen unerlaubte Datenüberschreibungen wirksam erhöht.

In jeder Speicherzelle sind beispielsweise ein Bit oder mehrere Bits vorhanden, welche jeweils mit Daten des Datenspeichers des Steuergeräts der Maschine belegt sind. Vorteilhafterweise ist die Vorrichtung ausgestaltet, die vom Anwendungsbereich umfassten Speicherzellen bitweise zu prüfen. Dadurch kann sichergestellt, dass der ganze Anwendungsdatenbereich geprüft wird, wodurch die Prüfgenauigkeit und somit die Sicherheit der Vorrichtung weiter erhöht werden kann.

In einer weiteren Ausgestaltung ist die Manipulationserkennungseinheit ausgestaltet, die Anwendungsdaten und die Anwendungsreferenzdaten jeweils einer kryptografischen Prüfung zu unterziehen und die als erste Prüfsumme und zweite Prüfsumme ausgestaltete Ergebnisse der kryptografischen Prüfungen miteinander zu vergleichen. Die kryptografische Prüfung kann vorteilhafterweise in einer kryptografischen Hashfunktion implementiert sein. Vorteilhafterweise ist die Manipulationserkennungseinheit ausgestaltet, die vom Anwendungsdatenbereich umfassten Speicherzellen des zu prüfenden Datenspeichers einer kryptografischen Prüfung zu unterziehen und das Ergebnis der kryptografischen Prüfung mit einem Ergebnis einer kryptografischen Prüfung der Anwendungsreferenzdaten der Maschine zu vergleichen. Das Ergebnis einer kryptografischen Prüfung liegt typischerweise in Form einer Prüfsumme vor. Die Prüfsumme der Anwendungsreferenzdaten kann alternativ vom Speicher bereitgestellt werden. Die kryptografische Prüfung der Anwendungsdaten der Maschine kann helfen, eine unerlaubte Manipulation von Anwendungsdaten sicher und zuverlässig zu entdecken, wenn die ermittelte Prüfsumme aus der kryptografischen Prüfung nicht der Prüfsumme der zum Vergleich eingezogenen Anwendungsreferenzdaten entspricht.

In einer vorteilhaften Ausgestaltung ist das Sicherheitsmerkmal als das Ergebnis des Vergleichs der ersten Prüfsumme mit der zweiten Prüfsumme ausgebildet. Dadurch kann das Sicherheitsmerkmal auf das Fehlen eines Integritätsattributs in den Anwendungsdaten der Maschine im Vergleich zu den Anwendungsreferenzdaten hinweisen, wodurch die Sicherheitsrelevanz der Vorrichtung erhöht werden kann.

Bevorzugterweise weist das Sicherheitsmerkmal einen Manipulationshinweis zu jedem Anwendungsdatenbereich auf, bei welchem der Vergleich der ersten Prüfsumme mit der zweiten Prüfsumme auf eine unzulässige Änderung der sich dort befindenden Daten hinweist. Dadurch kann die Vorrichtung im Falle einer unzulässigen Manipulation des Steuergerätes der Maschine nicht nur eine unzulässige Datenänderung, sondern auch den Anwendungsdatenbereich angeben, welcher von der unerlaubten Änderung betroffen ist. Dies erweitert den Informationsgehalt des Sicherheitsmerkmals und erhöht dadurch die Datensicherheit des mit der Vorrichtung versehenen Maschinensteuergerätes.

In einer weiteren Ausgestaltung ist die Manipulationserkennungseinheit ausgestaltet, ein Ausgangssignal zur Ansteuerung der Signalausgabeeinheit zu generieren. Dadurch kann eine direkte Steuerung der Signalausgabeeinheit verwirklicht werden, was zu einem vereinfachten und sichereren Aufbau der Vorrichtung beiträgt.

Die eingangs genannte Aufgabe kann ferner mit einem Steuergerät gelöst werden, welches eine Vorrichtung nach einem der obigen Ausgestaltungen und eine Debugschnittstelle, beispielsweise eine JTAG-Schnittstelle oder eine SWD-Schnittstelle, umfasst, durch welche die Daten des zu prüfenden Datenspeichers auslesbar sind. Die Debugschnittstelle ermöglicht die Ausführung einer Methodik zum Testen und Debuggen integrierter Schaltungen in Maschinen-Steuergeräten. Das Steuergerät profitiert von den Merkmalen der Vorrichtung, weil es dadurch die Fähigkeit besitzt, eine unerlaubte Manipulation von Anwendungsdaten zu erfassen und zu melden. Das Steuergerät profitiert von den Merkmalen der Vorrichtung, weil es dadurch die Fähigkeit besitzt, eine unerlaubte Manipulation von Anwendungsdaten zu erfassen und sie zu melden.

Die eingangs genannte Aufgabe kann ebenfalls mit einer Maschine gelöst werden, wobei die Maschine ein Steuergerät und eine mit dem Steuergerät verbundene Vorrichtung nach einem der obigen Ausgestaltungen und eine Debugschnittstelle, beispielsweise eine JTAG-Schnittstelle oder eine SWD-Schnittstelle, umfasst, durch welche die Daten des zu prüfenden Datenspeichers auslesbar sind. Die Maschine profitiert von den Merkmalen der Vorrichtung, weil sie dadurch die Fähigkeit besitzt, eine unerlaubte Manipulation ihrer Anwendungsdaten zu erfassen und zu melden.

In einer vorteilhaften Ausgestaltung kann es sich bei der Maschine um eine Verbrennungskraftmaschine, ein Hybridantriebssystem oder ein maritimes Automationssystem handeln. Solche Systeme gelten als potenzielle Ziele für unerlaubte Datenmanipulationen und eine Neuentwicklung solcher Systeme kann sehr aufwendig sein. Eine Nachrüstung solcher Systeme mit einer erfindungsgemäßen Vorrichtung stellt eine kostengünstige und zeiteffiziente Alternative zu einer Neuentwicklung dar.

Die eingangs genannte Aufgabe kann ferner mit einem computerimplementierten Verfahren nach Anspruch 11 gelöst werden.

Ein computerimplementiertes Verfahren zur Überwachung eines Steuergeräts einer Maschine umfasst folgende Schritte:
- Abrufen von Daten aus einem zu prüfenden und mehrere Speicherzellen aufweisendem Datenspeicher des Steuergeräts, wobei die Speicherzellen mittels Speicheradressen identifizierbar sind,
- Bereitstellen von Anwendungsreferenzdaten der Maschine,
- Erkennen und Extrahieren von Anwendungsdaten der Maschine aus den vom Datenspeicher abgerufenen Daten,
- Vergleichen der Anwendungsdaten der Maschine mit den Anwendungsreferenzdaten, und
- Wenn beim Vergleich der Maschinen-Anwendungsdaten mit den Anwendungsreferenzdaten ein Sicherheitsmerkmal mit einem Manipulationshinweis erfasst wird, Ausgeben eines Alarmsignals.

Sämtliche Verfahrensschritte können durch die erfindungsgemäße Vorrichtung durchgeführt werden, wodurch das Verfahren kostengünstig implementiert werden kann.

Das Verfahren vereinfacht die Erkennung von unerlaubten Anwendungsdatenmanipulationen in Steuergeräten von Maschinen in dem es eine Möglichkeit darstellt, die Anwendungsdaten aus der Maschine zu prüfen ohne die Maschinensteuergeräte umzuprogrammieren.

Im Folgenden ist die Erfindung beispielhaft mit Bezug auf die Zeichnungen näher erläutert.

Die bei den gezeigten Ausführungsformen beispielhaft dargestellte Merkmalskombination kann nach Maßgabe der obigen Ausführungen gemäß den für einen bestimmten Anwendungsfall notwendigen Eigenschaften der erfindungsgemäßen Vorrichtung und/oder des erfindungsgemäßen Verfahrens durch weitere Merkmale ergänzt werden.

In den Zeichnungen werden für Elemente gleicher Funktion und/oder gleichen Aufbaus dieselben Bezugszeichen verwendet.

Es zeigen:
Fig. 1: eine schematische Darstellung einer Vorrichtung zur Überwachung eines Steuergeräts einer Maschine gemäß einer beispielhaften Ausführungsform;
Fig. 2: eine schematische Darstellung eines Anwendungsdatenbereichs aus dem Datenspeicher einer Maschine;
Fig. 3: eine schematische Darstellung von Anwendungsdaten aus dem Datenspeicher einer Maschine;
Fig. 4: eine schematische Darstellung eines in einem Anwendungsdatenbereich einer Maschine erfassten Sicherheitsmerkmals aus einer erfindungsgemäßen Vorrichtung; und
Fig. 5: eine schematische Darstellung eines computerimplementierten Verfahrens zur Überwachung eines Steuergeräts einer Maschine.

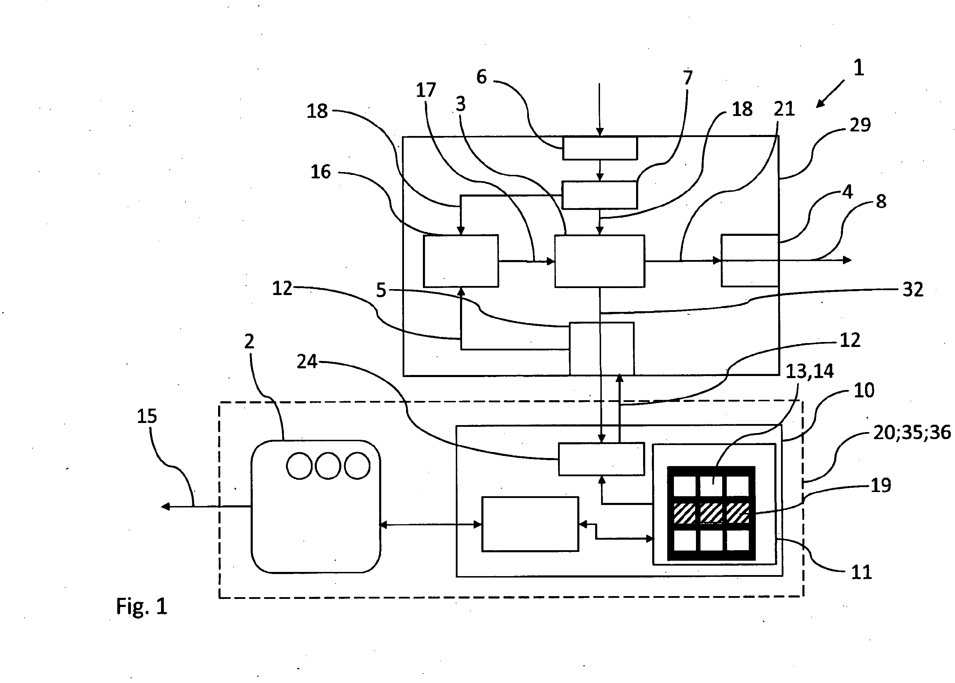

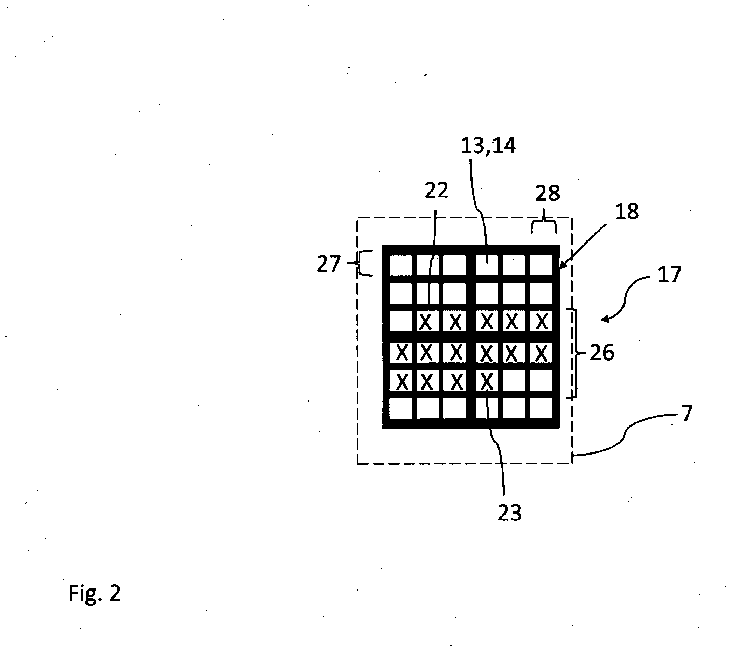

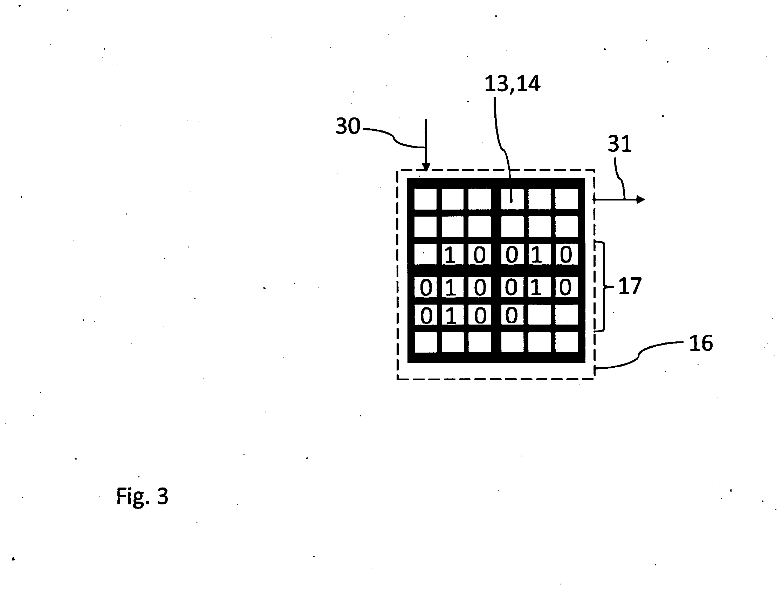

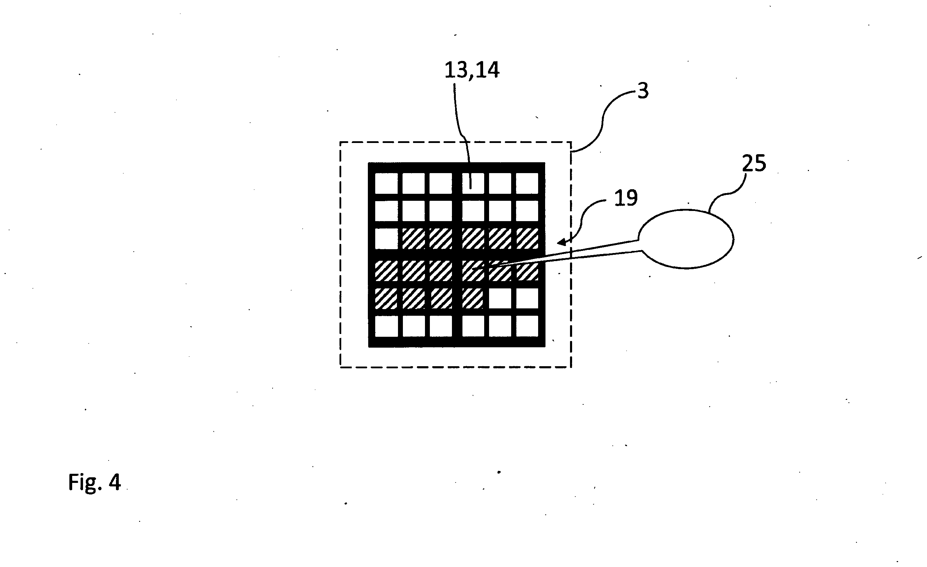

Im Folgenden ist eine erfindungsgemäße Vorrichtung 1 zur Überwachung eines Steuergeräts 10 einer Maschine 2 mit Bezug auf Fig. 1 beschrieben. Ferner sind Anwendungsreferenzdaten 18 zu der Maschine 2 gemäß Fig. 2, welche in einer erfindungsgemäßen Vorrichtung 1 vorhanden sind, ein in der Vorrichtung 1 vorhandenes Modul 16 zur Erkennung und Extraktion von Anwendungsdaten 17 der Maschine 2 gemäß Fig. 3, ein in einer Manipulationserkennungseinheit 3 der Vorrichtung 1 erfasstes Sicherheitsmerkmal 19 gemäß Fig. 4 und ein computerimplementiertes Verfahren 100 zur Überwachung eines Steuergeräts 10 einer Maschine 2.

In Fig. 1 ist eine vereinfachte, schematische Darstellung einer beispielhaften Ausführungsform der Vorrichtung 1. Die Vorrichtung 1 kann eine eigenständige Prozessorplatine 29 aufweisen und/oder auf einer Platine (nicht gezeigt) des Steuergeräts 10 integriert sein. Die nachfolgend beschriebene Blöcke, Module und Einheiten der Vorrichtung 1 können jeweils in Hardware, Software oder in einer Kombination aus beidem implementiert sein.

Die Vorrichtung 1 ist für die Überwachung des Steuergeräts 10 der Maschine 2 mittels eines Abrufs von Daten 12 aus einem Datenspeicher 11 des Steuergeräts 2 vorgesehen.

Hierzu weist die Vorrichtung 1 ein Lesemodul 5 zum Abrufen von Daten 12 aus einem zu prüfenden und mehrere Speicherzellen 13 aufweisendem Datenspeicher 11 des Steuergeräts 2. Die Speicherzellen 13 sind mittels Speicheradressen 14 identifizierbar.

Durch die Speicheradressen 14 können die Speicherzellen 13 im Datenspeicher 11 des Steuergeräts 2 eindeutig identifiziert werden.

Ein von der Vorrichtung 1 umfasster Speicher 7 stellt Anwendungsreferenzdaten 18 zu der Maschine 2 bereit. Die Anwendungsreferenzdaten 18 sind modellierte Daten oder Daten aus vergleichbaren, nicht manipulierten Maschinen (nicht gezeigt). Diese Daten weisen ein oder mehrere Integritätsattributen auf, die nur Daten in Steuergeräten aufweisen, die nicht unerlaubterweise manipuliert oder überschrieben worden sind. Ein Integritätsattribut kann beispielsweise eine Checksumme sein. Vorzugsweise weist die Vorrichtung 1 ein mit dem Speicher verbundenes Kommunikationsmodul 6 auf, mit welchem die im Speicher 7 vorhandenen Anwendungsreferenzdaten 18 zu der Maschine 2 aktualisierbar sind. Dadurch können neue Anwendungsreferenzdaten 18 in die Vorrichtung 1 aufgenommen werden um die Überwachungsqualität zu erhöhen.

In den abgerufenen Daten 12 des Steuergeräts 2 befinden sich Anwendungsdaten 17 der Maschine 2. Bei den Anwendungsdaten 17 handelt es sich um Maschinenanwendungsdaten, d.h. technische, betriebsrelevante Parameter der Maschine 2, wie z.B. eine Geschwindigkeit, eine Drehzahl, eine Sollgeschwindigkeit, eine Solldrehzahl, ein Start- und/oder einen Stopp-Befehl. Die Vorrichtung 1 weist ein Modul 16 zur Erkennung und Extraktion der Anwendungsdaten 17 der Maschine 2 aus den vom Datenspeicher 11 abgerufenen Daten 12. Das Modul 16 weist beispielsweise eine Funktion auf, mit welcher die Anwendungsdaten 17 des Datenspeichers 11 identifiziert und von den restlichen, von den Daten 12 umfassten Daten getrennt werden. Die Anwendungsdaten 17 können beispielsweise mit einem Attribut, wie z.B. einem bestimmten Datenparameter, einer Formatierung, und/oder Speicheradressen, versehen sein, mit welchem sie eindeutig identifizierbar sind.

Ferner umfasst die Vorrichtung 1 eine Manipulationserkennungseinheit 3 zum Vergleichen der Anwendungsdaten 17 mit den Anwendungsreferenzdaten 18 und eine Signalausgabeeinheit 4 zum Ausgeben eines Alarmsignals 8. Mithilfe des Vergleichs der Anwendungsdaten 17 mit den Anwendungsreferenzdaten 18 werden die Attributen der Anwendungsdaten 17 der Maschine 2 auf Integrität geprüft. Insbesondere prüft die Manipulationserkennungseinheit 3 ob die Anwendungsdaten 17 der Maschine 2 die Integritätsattributen aufweist, welche in den Anwendungsreferenzdaten 18 vorhanden sind. .

Die Manipulationserkennungseinheit 3 ist ausgestaltet ist, beim Vergleichen der Anwendungsdaten 17 der Maschine 2 mit den Anwendungsreferenzdaten 18 wenigstens ein Sicherheitsmerkmal 19 zu erfassen, das Sicherheitsmerkmal 19 auszuwerten und durch die Auswertung des Sicherheitsmerkmals 19 eine Manipulation der Steuergeräts 10 der Maschine 2 zu erkennen (siehe Fig. 4). Wird eine Manipulation des Steuergeräts 10 erkannt, so kann beispielsweise die Manipulationserkennungseinheit 3 die Signalausgabeeinheit 4 aktivieren, um ein Alarmsignal 8 auszugeben.

Bei dem Sicherheitsmerkmal 19 kann es sich um ein oder mehrere Integritätsattribute handeln, welche die Manipulationserkennungseinheit 3 in den Anwendungsreferenzdaten 18 erkennt und in den Anwendungsdaten 17 zur Prüfung der Integrität anwendet. Vorzugsweise handelt es sich beim Sicherheitsmerkmal 19 um ein oder mehrere Integritätsattribute, welche in den Anwendungsreferenzdaten 18 erkennbar und in den Anwendungsdaten 17 zur Prüfung derer Integrität anwendbar sind. Fehlen ein oder mehrere Integritätsattribute in den Anwendungsdaten 17, meldet die Manipulationserkennungseinheit 3 eine unerlaubte Manipulation der Anwendungsdaten 18 der Maschine 2 und generiert ein Signal 21 zur Aktivierung der Signalausgabeeinheit 4, so dass ein Alarmsignal 8 ausgegeben werden kann. Die Manipulationserkennungseinheit 3 kann vorteilhafterweise ausgestaltet sein, ein als Aktivierungssignal ausgestaltetes Signal 21 zur Steuerung der Signalausgabeeinheit 4 zu generieren.

Die Vorrichtung 1 ermöglicht eine Überprüfung von Anwendungsdaten 17 der Maschine 2 durch ausschließliches Lesen des sich im Steuergerät 10 der Maschine 2 befindenden Datenspeichers 11. Ferner können Steuergeräte vorhandener Maschinen mit vermindertem Aufwand mit der Vorrichtung 1 versehen oder nachgerüstet werden, ohne ihre Grundkonfiguration zu ändern und dadurch eine Neuzertifizierung zu benötigen. Die Speicherung der Anwendungsreferenzdaten 18 im Speicher 7 der Vorrichtung 1 ermöglichen eine zuverlässige und manipulationssichere Prüfung der Anwendungsdaten 17 der Maschine 2.

Die Vorrichtung 1 ist beispielsweise ausgestaltet, mit einem Startsignal 32 das Lesemodul 5 und damit den Lesevorgang von Daten 12 aus dem Steuergerät 10 zu starten. Die Vorrichtung 1 ist beispielsweise ausgestaltet, die mit dem Lesemodul 5 ausgelesenen Daten 12 dem Modul 16 bereitzustellen.

In Fig. 2 sind Attributen der Anwendungsreferenzdaten 18 dargestellt, die beispielsweise im Speicher 7 der Vorrichtung 1 gespeichert sein können. Die Anwendungsreferenzdaten 18 zu der Maschine 2 können vorteilhafterweise eine Anfangsspeicheradresse 22 und eine Endspeicheradresse 23 eines Anwendungsdatenbereichs 26 des zu prüfenden Datenspeichers 11 umfassen, wobei der Anwendungsdatenbereich 26 die Anwendungsdaten 17 der Maschine 2 beinhaltet. Die Speicherzellen 13 sind mittels der Speicheradressen 14 identifizierbar, wobei die Speicheradressen 14 beispielsweise eine Zeile 27 und eine Spalte 28 des Speichers 11 angeben. Die Anfangsspeicheradresse 22 gibt beispielsweise die Speicheradresse 14 des Datenspeichers 11 an, bei welcher der Anwendungsdatenbereich 26 beginnt, in welchem die Anwendungsdaten 17 der Maschine 2 gespeichert sind. Die Endspeicheradresse 23 gibt beispielsweise die Speicheradresse 14 des Datenspeichers 11 an, bei welcher der Anwendungsdatenbereich 26 endet, in welchem die Anwendungsdaten 17 der Maschine 2 gespeichert sind. Dies stellt sicher, dass die Anwendungsdaten 17, wie z.B. Drehzahl, Geschwindigkeit oder Betriebszustand, im Steuergerät 10 der Maschine 2 auf eine unerlaubte Manipulation geprüft werden, was die Sicherheit des Maschinenbetriebs gegen unerlaubte Datenüberschreibungen wirksam erhöht. Die Anwendungsreferenzdaten 18 und insbesondere die Anfangs- und Endspeicheradressen 22,23 werden vorteilhafterweise dem Modul 16 bereitgestellt (siehe Fig. 1).

In Fig. 3 ist die Funktionsweise des Moduls 16 dargestellt. Das Modul 16 ist beispielsweise ausgestaltet alle mit Daten 12 belegten Speicheradressen 14 des Datenspeichers 11 Zeile für Zeile und Spalte für Spalte in den Zählrichtungen 30,31 der Zeilen 27 und Spalten 28 zu durchsuchen. Das Modul 16 ist vorteilhafterweise ausgestaltet, mithilfe der Anfangsspeicheradresse 22 und die Endspeicheradresse 23 den Anwendungsdatenbereich 26 zu erkennen und die darin enthaltene Anwendungsdaten 17 der Maschine 2 zu extrahieren. Das Modul 16 ist bevorzugterweise ausgestaltet, mithilfe einer oder mehrerer Anfangsspeicheradressen 22 und Endspeicheradressen 23 auch mehrere Anwendungsdatenbereiche 26 zu erkennen und alle darin enthaltenen Anwendungsdaten 17 der Maschine 2 zu extrahieren. Ferner ist das Modul 16 vorteilhafterweise ausgestaltet, der Manipulationserkennungseinheit 3 die Anwendungsdaten 17 der Maschine 2 bereitzustellen.

In jeder Speicherzelle 13 ist ein Bit oder sind mehrere Bits vorhanden, welche jeweils mit Daten 12 belegt sein können. Vorteilhafterweise ist die Vorrichtung 1 ausgestaltet, die vom Anwendungsbereich 26 umfassten Speicherzellen 13 bitweise zu prüfen. Dadurch kann sichergestellt werden, dass der ganze Anwendungsdatenbereich 26 geprüft wird, wodurch die Prüfgenauigkeit und somit die Sicherheit der Vorrichtung 1 weiter erhöht werden kann.

In Fig. 4 ist die Funktionsweise der Manipulationserkennungseinheit 3 dargestellt. Beispielsweise ist die Manipulationserkennungseinheit 3 ausgestaltet, die Anwendungsdaten 17 der Maschine 2 und die Anwendungsreferenzdaten 18 zu empfangen. Die Manipulationserkennungseinheit 3 vergleicht die Anwendungsdaten 17 mit den Anwendungsreferenzdaten 18 und erfasst bei diesem Vergleich wenigstens ein Sicherheitsmerkmal 19. Das Sicherheitsmerkmal 19 wird ebenfalls in der Manipulationserkennungseinheit 3 ausgewertet, wodurch eine Manipulation des Steuergeräts 10 der Maschine 2 erkennbar ist.

Vorteilhafterweise ist die Manipulationserkennungseinheit 3 ausgestaltet, die Anwendungsdaten 17 der Maschine 2 und die Anwendungsreferenzdaten 18 jeweils einer kryptografischen Prüfung zu unterziehen und die als erste Prüfsumme 33 und zweite Prüfsumme 34 ausgestaltete Ergebnisse der kryptografischen Prüfungen miteinander zu vergleichen. Vorteilhafterweise ist die Manipulationserkennungseinheit 3 ausgestaltet, die sich im Anwendungsdatenbereich 26 befindenden Anwendungsdaten 17 der Maschine 2 und die Anwendungsreferenzdaten 18 jeweils einer kryptografischen Prüfung zu unterziehen und die als erste Prüfsumme 33 und zweite Prüfsumme 34 ausgestaltete Ergebnisse der kryptografischen Prüfungen miteinander zu vergleichen.

Das Sicherheitsmerkmal 19 kann bevorzugterweise als das Ergebnis des Vergleichs der ersten Prüfsumme 33 mit der zweiten Prüfsumme 34 ausgestaltet sein. Dadurch kann das Sicherheitsmerkmal 19 auf das Fehlen eines Integritätsattributs in den Anwendungsdaten 17 der Maschine 2 im Vergleich zu den Anwendungsreferenzdaten 18 hinweisen, wodurch die Sicherheitsrelevanz der Vorrichtung 1 für die Maschine 2 erhöht werden kann.

Das Sicherheitsmerkmal 19 weist vorteilhafterweise zu jedem Anwendungsbereich 26, bei welchem der Vergleich der ersten Prüfsumme 33 mit der zweiten Prüfsumme 34 auf eine unzulässige Änderung der sich dort befindenden Daten 12 hinweist, einen Manipulationshinweis 25 auf. Dadurch kann das Sicherheitsmerkmal 19 nicht nur einen Hinweis auf das Fehlen eines Integritätsattributs in den Anwendungsdaten 17 hinweisen, sondern auch eine Auskunft darüber senden, welcher Anwendungsdatenbereich 26 möglicherweise unerlaubterweise manipuliert worden ist, was beim Überwachen mehrere Anwendungsbereichen (nicht gezeigt) sehr vorteilhaft sein kann.

Ein Steuergerät 10, welches die Vorrichtung 1 umfasst, kann ebenfalls die eingangs genannte Aufgabe lösen, wobei das Steuergerät 10 eine Debugschnittstelle 24, beispielsweise eine JTAG-Schnittstelle oder eine SWD-Schnittstelle, umfasst, durch welche die Daten 12 des zu prüfenden Datenspeichers 11 auslesbar ist. Die Debugschnittstelle 24 weist bevorzugterweise einen Zustandsautomaten (nicht gezeigt) auf, mit welchem sie steuerbar ist. Ein Zustandsautomat ist eine Programmierstruktur, die einen dynamischen Fluss zu Zuständen in Abhängigkeit von Werten aus vorigen Zuständen oder Informationseingaben ermöglicht. Er hat eine endliche Anzahl an Zuständen die er einnehmen kann.

Die Debugschnittstelle 24 ermöglicht die Ausführung einer Methodik zum Testen und Debuggen integrierter Schaltungen in Maschinen-Steuergeräten. Die Debugschnittstelle 24 kann beispielsweise nach dem IEEE-Standard 1149 ausgebildet sein. Das Steuergerät 10 profitiert von den Merkmalen der Vorrichtung 1, weil es dadurch die Fähigkeit besitzt, eine unerlaubte Manipulation von Anwendungsdaten 17 zu erfassen und zu melden, ohne umprogrammiert zu werden.

Die eingangs genannte Aufgabe kann ebenfalls mit einer Maschine 2 gelöst werden, wobei die Maschine 2 ein Steuergerät 10 und eine mit dem Steuergerät 10 verbundene Vorrichtung 1 nach einem der obigen Ausgestaltungen und eine Debugschnittstelle 24, beispielsweise eine JTAG-Schnittstelle oder eine SWD-Schnittstelle, umfasst, durch welche die Daten 12 des zu prüfenden Datenspeichers 11 auslesbar sind. Die Maschine 2 profitiert von den Merkmalen der Vorrichtung 1, weil sie dadurch die Fähigkeit besitzt, eine unerlaubte Manipulation ihrer Anwendungsdaten 17 zu erfassen und zu melden, ohne dass das Steuergerät 10 umprogrammiert werden muss.

In einer vorteilhaften Ausgestaltung kann es sich bei der Maschine 2 um eine Verbrennungskraftmaschine 20 zur Bereitstellung einer mechanischen Leistung 15, ein Hybridantriebssystem 35 oder ein maritimes Automationssystem 36 handeln. Das maritimes Automationssystem 36 umfasst typischerweise zumindest einen Steuerhebel zur Leistungseinstellung eines Antriebs und eine oder mehrere Anzeigen (nicht gezeigt). Solche Systeme gelten als potenzielle Ziele für unerlaubte Datenmanipulationen und eine Neuentwicklung solcher Systeme kann sehr aufwendig sein. Eine Nachrüstung solcher Systeme mit einer erfindungsgemäßen Vorrichtung 1 stellt eine kostengünstige und zeiteffiziente Alternative zu einer Neuentwicklung dar und ermöglicht einen sofortigen Maschinenschutz gegen unerlaubte Manipulationen.

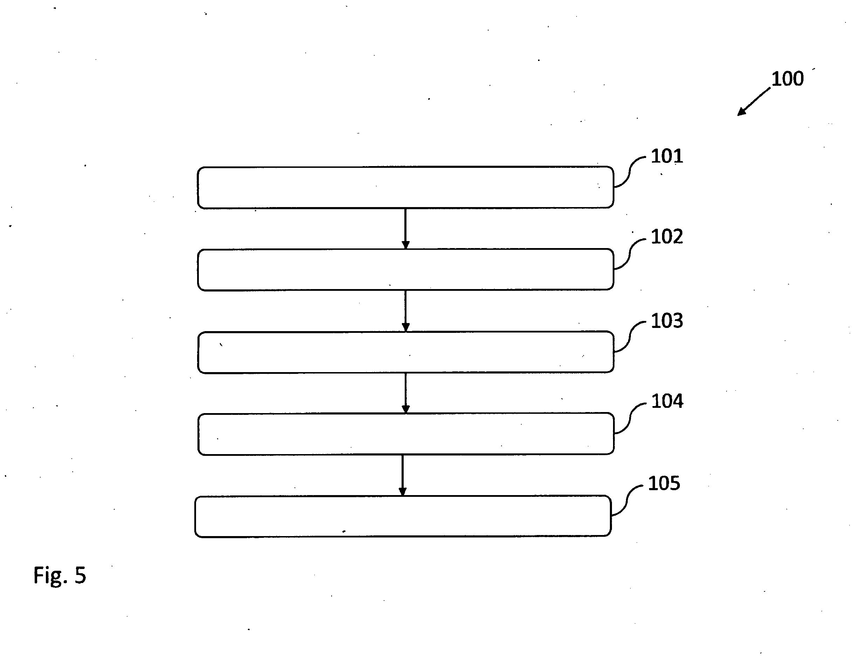

In Fig. 5 ist ein computerimplementiertes Verfahren 100 zur Überwachung eines Steuergeräts 10 einer Maschine 2 dargestellt. Das computerimplementierte Verfahren 100 umfasst folgende Schritte:
Schritt 101: Abrufen von Daten 12 aus einem zu prüfenden und mehrere Speicherzellen 13 aufweisendem Datenspeicher 11 des Steuergeräts 10, wobei die Speicherzellen 13 mittels Speicheradressen 14 identifizierbar sind,
Schritt 102: Bereitstellen von Anwendungsreferenzdaten 18 zu der Maschine 2,
Schritt 103: Erkennen und Extrahieren von Anwendungsdaten 17 der Maschine 2 aus den vom Datenspeicher 11 abgerufenen Daten 12,
Schritt 104: Vergleichen der Anwendungsdaten 17 der Maschine 2 mit den Anwendungsreferenzdaten 18, und
Schritt 105: Wenn beim Vergleich der Anwendungsdaten 17 der Maschine 2 mit den Anwendungsreferenzdaten 18 ein Sicherheitsmerkmal 19 mit einem Manipulationshinweis 25 erfasst wird, Ausgeben eines Alarmsignals 8.

Sämtliche Verfahrensschritte können durch die erfindungsgemäße Vorrichtung 1 durchgeführt werden, wodurch das Verfahren 100 kostengünstig implementiert werden kann.

Das Verfahren 100 vereinfacht die Erkennung von unerlaubten Anwendungsdatenmanipulationen in Steuergeräten 10 von Maschinen 2 in dem es eine Möglichkeit darstellt, die Anwendungsdaten 17 der Maschine 2 zu prüfen, ohne dass die Steuergeräte 10 umprogrammiert werden müssen.

## Patentansprüche

1. Vorrichtung (1) zur Überwachung eines Steuergeräts (10) einer Maschine (2), umfassend:
- ein Lesemodul (5) zum Abrufen von Daten (12) aus einem zu prüfenden und mehrere Speicherzellen (13) aufweisendem Datenspeicher (11) des Steuergeräts (2), wobei die Speicherzellen (13) mittels Speicheradressen (14) identifizierbar sind,
- einen Speicher (7) zur Bereitstellung von Anwendungsreferenzdaten (18),
- ein Modul (16) zur Erkennung und Extraktion von Anwendungsdaten (17) der Maschine (2) aus den vom Datenspeicher (11) abgerufenen Daten (12),
- eine Manipulationserkennungseinheit (3) zum Vergleichen der Anwendungsdaten (17) der Maschine (2) mit den Anwendungsreferenzdaten (18) und
- eine Signalausgabeeinheit (4) zum Ausgeben eines Alarmsignals (8),
- wobei die Manipulationserkennungseinheit (3) ausgestaltet ist, beim Vergleichen der Anwendungsdaten (17) der Maschine (2) mit den Anwendungsreferenzdaten (18) wenigstens ein Sicherheitsmerkmal (19) zu erfassen, das Sicherheitsmerkmal (19) auszuwerten und durch die Auswertung des Sicherheitsmerkmals (19) eine Manipulation der Steuergeräts (10) der Maschine (2) zu erkennen.

2. Vorrichtung (1) nach Anspruch 1, wobei die Anwendungsreferenzdaten (18) zu der Maschine (2) eine Anfangsspeicheradresse (22) und eine Endspeicheradresse (23) eines Anwendungsdatenbereichs (26) des zu prüfenden Datenspeichers (11) umfassen, wobei der Anwendungsdatenbereich (26) die Anwendungsdaten (17) der Maschine (2) beinhaltet.

3. Vorrichtung (1) nach Anspruch 2, wobei die Vorrichtung (1) ausgestaltet ist, die vom Anwendungsbereich (26) umfassten Speicherzellen (13) bitweise zu überprüfen.

4. Vorrichtung (1) nach einem der vorhergehenden Ansprüche, wobei die Manipulationserkennungseinheit (3) ausgestaltet ist, die Anwendungsdaten (17) der Maschine (2) und die Anwendungsreferenzdaten (18) jeweils einer kryptografischen Prüfung zu unterziehen und die als erste Prüfsumme (33) und zweite Prüfsumme (34) ausgestaltete Ergebnisse der kryptografischen Prüfungen miteinander zu vergleichen.

5. Vorrichtung (1) nach Anspruch 4, wobei das Sicherheitsmerkmal (19) als das Ergebnis des Vergleichs der ersten Prüfsumme (33) mit der zweiten Prüfsumme (34) ausgebildet ist.

6. Vorrichtung (1) nach Anspruch 4 oder 5, wobei das Sicherheitsmerkmal (19) zu jedem Anwendungsdatenbereich (26), bei welchem der Vergleich der ersten Prüfsumme (33) mit der zweiten Prüfsumme (34) auf eine unzulässige Änderung der sich dort befindlichen Daten (12) hinweist, einen ausgebbaren Manipulationshinweis (25) aufweist.

7. Vorrichtung (1) nach einem der vorhergehenden Ansprüche, wobei die Manipulationserkennungseinheit (3) ausgestaltet ist, ein Ausgangssignal (21) zur Ansteuerung der Signalausgabeeinheit (4) zu generieren.

8. Steuergerät (10), umfassend eine Vorrichtung (1) nach einem der vorhergehenden Ansprüche, wobei das Steuergerät (10) eine Debugschnittstelle (24), beispielsweise eine JTAG-Schnittstelle oder eine SWD-Schnittstelle, umfasst, durch welche die Daten (12) des zu prüfenden Datenspeichers (11) auslesbar sind

9. Maschine (2), umfassend ein Steuergerät (10) und eine mit dem Steuergerät (10) verbundene Vorrichtung (1) nach einem der Ansprüche 1 bis 7, wobei das Steuergerät (10) eine Debugschnittstelle (24), beispielsweise eine JTAG-Schnittstelle oder eine SWD-Schnittstelle, umfasst, durch welche die Daten (12) des zu prüfenden Datenspeichers (11) auslesbar sind.

10. Maschine (2) nach Anspruch 9, wobei die Maschine (2) als eine Verbrennungskraftmaschine (20) ausgestaltet ist.

11. Computerimplementiertes Verfahren (100) zur Überwachung eines Steuergeräts (10) einer Maschine (2) umfassend folgende Schritte:
Schritt 101: Abrufen von Daten (12) aus einem zu prüfenden und mehrere Speicherzellen (13) aufweisendem Datenspeicher (11) des Steuergeräts (2), wobei die Speicherzellen (13) mittels Speicheradressen (14) identifizierbar sind,
Schritt 102: Bereitstellen von Anwendungsreferenzdaten (18) zu der Maschine (2),
Schritt 103: Erkennen und Extrahieren von Anwendungsdaten (17) der Maschine (2) aus den vom Datenspeicher (11) abgerufenen Daten (12),
Schritt 104: Vergleichen der Anwendungsdaten (17) der Maschine (2) mit den Anwendungsreferenzdaten (18), und .
Schritt 105: Wenn beim Vergleich der Anwendungsdaten (17) der Maschine (2) mit den Anwendungsreferenzdaten (18) ein Sicherheitsmerkmal (19) mit einem Manipulationshinweis (25) erfasst wird, Ausgeben eines Alarmsignals (8).
